# EUROPÄISCHE PATENTSCHRIFT

(11) **EP 3 343 102 B1**
(45) Veröffentlichungstag und Bekanntmachung des Hinweises auf die Patenterteilung: **10.03.2021**
(21) Anmeldenummer: 18150052.1
(22) Anmeldetag: 02.01.2018
(51) Int. Cl.: F21V 8/00, G09F 13/00

(54) **LICHTLEITER-ELEMENT, ANORDNUNG ZUR LICHTABGABE SOWIE LEUCHTE**
LIGHT CONDUCTOR ELEMENT, ASSEMBLY FOR EMITTING LIGHT AND LUMINAIRE
ÉLÉMENT DE GUIDE D'ONDES OPTIQUES, AGENCEMENT D'ÉMISSION DE LUMIÈRE AINSI QUE LUMINAIRE

(30) Priorität: 30.12.2016 DE 202016107502 U
(43) Veröffentlichungstag der Anmeldung: 04.07.2018
(73) Patentinhaber: Zumtobel Lighting GmbH, 6850 Dornbirn (AT)
(72) Erfinder: MACHATE, Andreas, 88239 Wangen im Allgäu (DE)
(74) Vertreter: Thun, Clemens

(56) Entgegenhaltungen:
- JP-A- H07 230 710
- US-A1- 2003 099 117
- US-A1- 2012 081 920
- US-A1- 2013 044 514
- US-A1- 2015 369 996
- US-B1- 7 681 347

## Beschreibung

Die Erfindung betrifft ein Lichtleiter-Element mit einen plattenförmigen Bereich, bei dem ein Randbereich zum Eintritt von einem Licht vorgesehen ist. Weiterhin betrifft die Erfindung eine Anordnung zur Lichtabgabe mit einem solchen Lichtleiter-Element sowie eine Leuchte.

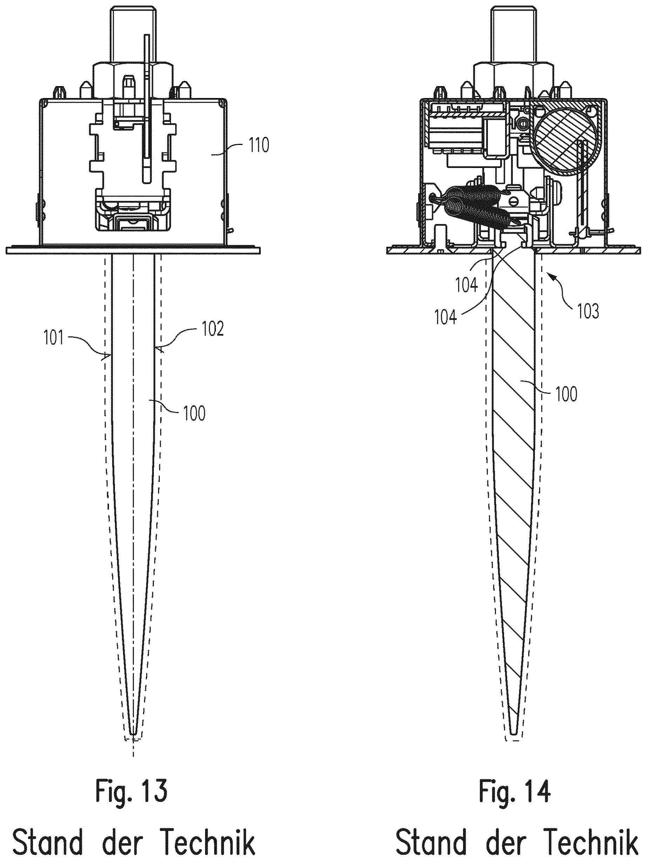

Fig. 13 zeigt eine Leuchte in Form einer Rettungszeichenleuchte gemäß dem Stand der Technik. Die Leuchte weist ein Leuchtengehäuse 110, eine LED-Lichtquelle (LED: Licht emittierende Diode) zur Erzeugung eines Lichts auf, sowie einen Lichtleiter 100. Der Lichtleiter 100 weist einen plattenförmigen Bereich mit einem ersten großen Oberflächenbereich 101 und einem dazu parallelen zweiten großen Oberflächenbereich 102 auf. In Fig. 14 ist ein entsprechender Querschnitt skizziert. Der Lichtleiter 100 weist einen Randbereich 103 auf, der zum Eintritt des von der LED-Lichtquelle abgestrahlten Lichts vorgesehen ist; die beiden großen Oberflächenbereiche 101, 102 des Lichtleiters 100 sind zum Austritt des Lichts vorgesehen. Der Lichtleiter 100 bildet so den Licht-abgebenden Flächenbereich der Leuchte und damit einen vergleichsweise großen Außenflächenbereich der Leuchte.

Der Lichtleiter 100 weist an dem Randbereich 103, der für den Lichteintrag vorgesehen ist, zwei gegenüberliegende Nuten 104 auf, die zur Befestigung des Lichtleiters 100 in dem Leuchtengehäuse 110 dienen. Allerdings führt diese Formgestaltung dazu, dass ein Teil des Lichts an den Nuten 104 reflektiert bzw. gestreut wird und im Weiteren für die Lichtabgabe über die beiden großen Oberflächenbereiche 101, 102 nicht mehr zur Verfügung steht. So ist der lichttechnische Wirkungsgrad limitiert. Im Weiteren führt der Einfluss der Nuten 104 auch dazu, dass die Homogenität der Lichtabgabe über die beiden großen Oberflächenbereiche 101, 102 reduziert ist.

Außerdem weist der Lichtleiter 100 eine verhältnismäßig große Stärke auf, was nachteilig mit Bezug auf den erforderlichen Materialeinsatz zur Herstellung des Lichtleiters 100 ist.

Aus der US 2013/0044514 A1 ist ein Lichtleiter-Element mit einem plattenförmigen Bereich und einem Randbereich bekannt. Der Randbereich dient zum Lichteintritt und weist Ausschnitte auf.

Aus der US 7,681,347 B1 ist ein plattenförmiges Lichtleiter-Element mit einem flanschförmigen Randbereich bekannt, der zum Lichteintritt ausgestaltet ist.

Ein weiteres plattenförmiges Lichtleiter-Element mit einem Randbereich zur Lichteinstrahlung ist aus der JP H07-230710 A bekannt

Aus der US 2015/369996 A1 ist schließlich ein Lichtleiter-Element gemäß dem Oberbegriff von Anspruch 1 bekannt.

Der Erfindung liegt die Aufgabe zugrunde, ein Lichtleiter-Element anzugeben, das sich bei vorteilhaften optischen Eigenschaften und Herstellungsmöglichkeiten besonders geeignet an einem Leuchtengehäuse befestigen lässt. Außerdem soll eine Anordnung zur Lichtabgabe mit einem solchen Lichtleiter angegeben werden, sowie eine entsprechende Leuchte.

Diese Aufgabe wird gemäß der Erfindung mit den in den unabhängigen Ansprüchen genannten Gegenständen gelöst. Besondere Ausführungsarten der Erfindung sind in den abhängigen Ansprüchen angegeben.

Gemäß der Erfindung ist ein Lichtleiter-Element vorgesehen, das einen plattenförmigen Bereich mit einem ersten Oberflächenbereich, welcher sich in einer ersten Ebene erstreckt, und einem dazu parallelen zweiten Oberflächenbereich, welcher sich in einer zweiten Ebene erstreckt, aufweist. Ein Randbereich des Lichtleiter-Elements, welcher in einer Ebene senkrecht zur ersten Ebene angeordnet ist und entlang einer Längsseite des Lichtleiter-Elements gebildet ist, weist Stellen auf, welche zwischen der ersten Ebene und der zweiten Ebene angeordnet sind, wobei jede Stelle zum Eintritt von einem durch zumindest eine LED erzeugten Licht vorgesehen. Der erste Oberflächenbereich und/oder der zweite Oberflächenbereich sind zum Austritt des Lichts vorgesehen. Weiterhin weist das Lichtleiter-Element einen länglichen, flanschartigen Bereich auf, der sich entlang des für den Eintritt des Lichts vorgesehenen Randbereichs erstreckend angeordnet ist, wobei der flanschartige Bereich einen Flächenbereich, der auf einer senkrecht zur ersten Ebene orientierten dritten Ebene angeordnet ist, und einen zum Flächenbereich parallelen weiteren Flächenbereich aufweist, wobei der flanschartige Bereich über den ersten Oberflächenbereich hinausragend gestaltet ist.

Der flanschartige Bereich eignet sich besonders gut als Angriffsfläche für eine Befestigung des Lichtleiter-Elements an einem Trägerelement, beispielsweise in einem Leuchtengehäuse. Die Stärke des Lichtleiter-Elements, also der Abstand der beiden großen Oberflächenbereiche, kann besonders gering gewählt werden, weil keine Nuten, wie sie aus dem Stand der Technik bekannt sind, vorgesehen werden müssen. So lässt sich das Lichtleiter-Element insbesondere unter sehr geringem Materialeinsatz fertigen. Außerdem lässt sich durch den flanschartigen Bereich erzielen, dass ein Verlust von Licht auf dem Weg zwischen der Eintrittsstelle in das Lichtleiter-Element und den Oberflächenbereichen besonders gering gehalten werden kann. Wenn als Lichtquelle eine Platine mit LEDs vorgesehen ist, lässt sich durch den flanschartigen Bereich eine besonders geeignete, verhältnismäßig großflächige bzw. breite Auflagefläche für die Platine bilden. Dies ist insbesondere vorteilhaft mit Bezug auf eine einfache und zuverlässige Positionierung der Platine relativ zu dem Lichtleiter-Element und damit für eine besonders effiziente Einstrahlung des von den LEDs abgegebenen Lichts in das Innere des Lichtleiter-Elements.

Vorzugsweise sind der plattenförmige Bereich und der flanschartige Bereich nicht zerstörungsfrei voneinander trennbar miteinander verbunden, insbesondere stoffschlüssig miteinander verbunden, beispielsweise aus einem Stück bestehend gebildet. Dies ist insbesondere vorteilhaft, weil so die Anzahl der einzelnen Bauteile gering gehalten werden kann, wenn das Lichtleiter-Element in einer Anordnung zur Lichtabgabe oder einer Leuchte verwendet wird. Auch der Zusammenbau einer entsprechenden Anordnung bzw. Leuchte ist damit erleichtert.

Vorzugsweise ist der flanschartige Bereich geradlinig gestaltet. So eignet er sich besonders zur Anlage an einer planen Anlagefläche eines Trägerelements, beispielsweise in einer Leuchte.

Vorzugsweise ist der flanschartige Bereich mit Bezug auf den ersten großen Oberflächenbereich senkrecht abstehend gestaltet. So lässt sich besonders leicht eine rechtwinklige Anordnung des plattenförmigen Bereichs des Lichtleiter-Elements relativ zu einer Oberfläche eines Leuchtengehäuses oder dergleichen erzielen. Dies ist insbesondere vorteilhaft mit Bezug auf das äußere Erscheinungsbild der Leuchte.

Vorzugsweise weist das Lichtleiter-Element außerdem einen weiteren länglichen, flanschartigen Bereich auf, der sich entlang des Randbereichs erstreckend über den zweiten großen Oberflächenbereich hinausragend gestaltet ist. So lässt sich das Lichtleiter-Element besonders geeignet stabil befestigen.

Erfindungsgemäß weist der flanschartige Bereich mindestens eine Aussparung in Form einer Durchgangsöffnung, welche sich parallel zur ersten Ebene vom Flächenbereich hin zum weiteren Flächenbereich erstreckt, zur Totalreflexion des über den Randbereich eingetretenen Lichts auf, um das totalreflektierte Licht in den plattenförmigen Bereich zu leiten, und wobei die mindestens eine Aussparung korrelierend zu mindestens einer der Stellen ausgestaltet ist. Durch die Aussparung lässt sich bewirken, dass ein besonders großer Anteil des von der LED abgestrahlten Lichts die beiden großen Oberflächenbereiche erreicht.

Vorzugsweise weist der flanschartige Bereich ein Loch zur Befestigung und/oder Positionierung des Lichtleiter-Elements an einem Trägerelement und/oder zur Befestigung und/oder Positionierung einer Platine an dem Lichtleiter-Element auf. Hierdurch ist eine besonders einfache Befestigung des Lichtleiter-Elements an einem Trägerelement bzw. einer Platine an dem Lichtleiter-Element ermöglicht, wobei sich bewirken lässt, dass sich das Loch praktisch nicht negativ auf den Lichtverlauf von der Eintrittsstelle zu den beiden großen Oberflächenbereichen auswirkt.

Vorzugsweise weist das Lichtleiter-Element auf wenigstens einem der beiden großen Oberflächenbereiche Lichtauskoppelstrukturen oder Lichtauskoppelelemente auf. Auf diese Weise eignet sich das Lichtleiter-Element besonders gut zur Abgabe des Lichts über den ersten und/oder den zweiten großen Oberflächenbereich.

Vorzugsweise weist das Lichtleiter-Element außerdem einen, an dem Randbereich ausgebildeten Linsenbereich zur optischen Beeinflussung des Lichts auf. So lässt sich der Lichtweg innerhalb des Lichtleiter-Elements besonders geeignet vorteilhaft beeinflussen.

Gemäß einem weiteren Aspekt der Erfindung ist eine Anordnung zur Lichtabgabe vorgesehen, die ein anmeldungsgemäßes Lichtleiter-Element und eine Platine mit mindestens einer darauf angeordneten LED zur Erzeugung des Lichts aufweist. Dabei ist die LED gegenüber dem Lichtleiter-Element derart angeordnet, dass das Licht über den Randbereich in das Lichtleiter-Element eintritt und über den ersten großen Oberflächenbereich und/oder den zweiten großen Oberflächenbereich aus dem Lichtleiter-Element austritt.

Gemäß einem weiteren Aspekt der Erfindung ist eine Anordnung zur Lichtabgabe vorgesehen, die ein anmeldungsgemäßes Lichtleiter-Element aufweist, sowie eine an dem Randbereich des Lichtleiter-Elements angeordnete LED zur Erzeugung des Lichts. Auf diese Weise lässt sich insbesondere erzielen, dass auf eine Platine zur Halterung der LED verzichtet werden kann. Insbesondere kann die LED unmittelbar auf dem Randbereich des Lichtleiter-Elements befestigt sein.

Vorzugsweise weist die Anordnung dabei außerdem eine, insbesondere unmittelbar an dem Randbereich angeordnete und mit der LED elektrisch verbundene Leiterbahn zur Stromversorgung der LED auf. Auch dies ist vorteilhaft, weil auf diese Weise kein gesondertes Element zur Anordnung einer entsprechenden Leiterbahn vorgesehen werden muss.

Gemäß einem weiteren Aspekt der Erfindung ist eine Leuchte mit einem anmeldungsgemäßen Lichtleiter-Element oder einer anmeldungsgemäßen Anordnung zur Lichtabgabe vorgesehen. Beispielsweise kann es sich bei der Leuchte um eine Rettungszeichenleuchte handeln. Vorzugsweise weist dabei das Lichtleiter-Element einen weiteren Randbereich auf, insbesondere einen dem zuerst genannten Randbereich gegenüberliegenden weiteren Randbereich, wobei die Leuchte derart gestaltet ist, dass der weitere Randbereich eine Außenfläche der Leuchte bildet. So lässt sich eine praktisch "rahmenlose" Lichtabgabefläche erzielen.

Die Erfindung wird im Folgenden anhand von Ausführungsbeispielen und mit Bezug auf die Zeichnungen näher erläutert. Es zeigen:
- Fig. 1: eine perspektivische Skizze einer anmeldungsgemäßen Anordnung zur Lichtabgabe nach Art einer Explosionsdarstellung, mit einem anmeldungsgemäßen Lichtleiter-Element mit einem plattenförmigen Bereich und zwei flanschartigen Bereichen und mit einer LED-Platine,
- Fig. 2: eine, der Fig. 1 entsprechende Skizze aus einer anderen Blickrichtung,
- Fig. 3: eine Seitenansicht der Anordnung,
- Fig. 4: eine Ansicht eines seitlichen Endbereichs des Lichtleiter-Elements bei Blickrichtung entlang des plattenförmigen Bereichs,
- Fig. 5: eine perspektivische Skizze eines Eckbereichs einer weiteren anmeldungsgemäßen Anordnung zur Lichtabgabe, bei der auf dem Lichtleiter-Element unmittelbar eine LED und eine Leiterbahn zur Stromversorgung der LED angeordnet ist,
- Fig. 6: eine entsprechende Seitenansicht,
- Fig. 7: eine Skizze zu einer Ausführung, bei der das Lichtleiter-Element lediglich auf einer Seite einen flanschartigen Bereich aufweist,
- Fig. 8: eine Ansicht eines Endbereichs des Lichtleiter-Elements bei Blickrichtung auf den zum Lichteintrag vorgesehenen Randbereich,
- Fig. 9: eine Ansicht des Endbereichs bei entgegengesetzter Blickrichtung,
- Fig. 10: eine Skizze zu einer Variation, bei der die flanschartigen Bereiche zur Halterung der Platine umgebogene Endbereiche aufweisen,
- Fig. 11: eine Seitenansicht einer anmeldungsgemäßen Leuchte,
- Fig. 12: eine entsprechende Querschnitt-Skizze,
- Fig. 13: eine Seitenansicht einer Leuchte gemäß dem Stand der Technik, und
- Fig. 14: eine entsprechende Querschnitt-Skizze.

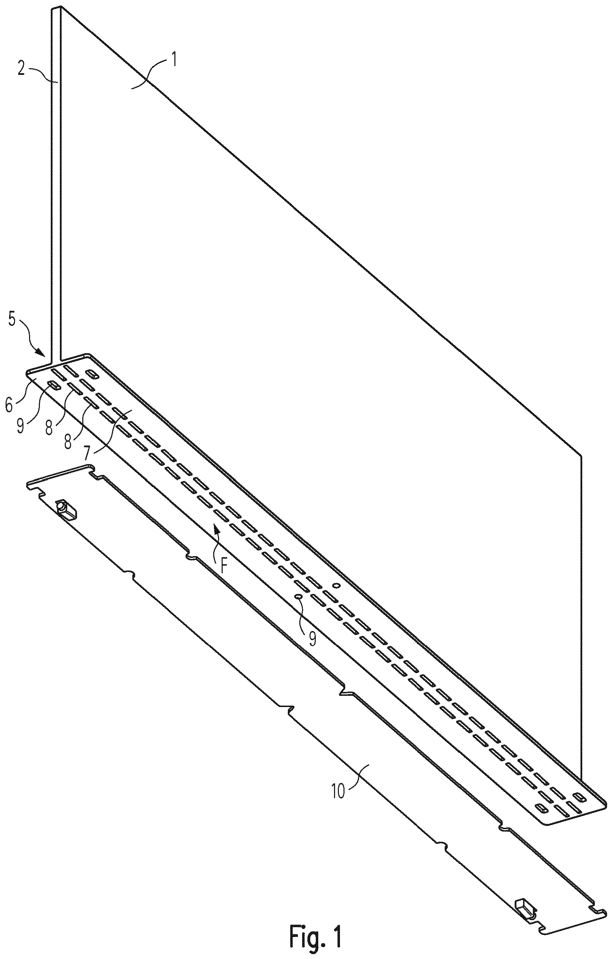

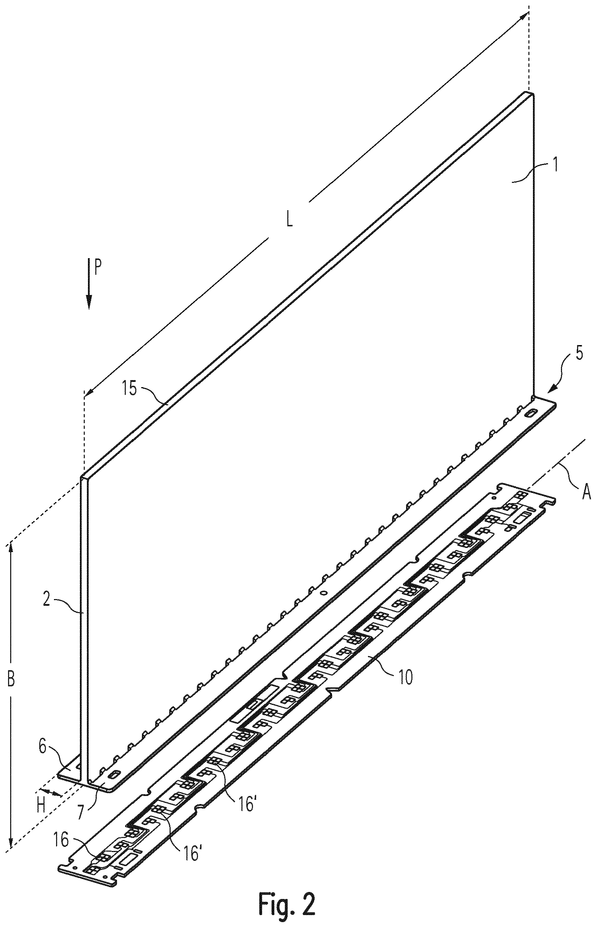

Fig. 1 zeigt eine perspektivische Skizze einer anmeldungsgemäßen Anordnung zur Lichtabgabe nach Art einer Explosionsdarstellung. Fig. 2 zeigt eine entsprechende Skizze der Anordnung aus einem anderen Blickwinkel. Die Anordnung umfasst ein anmeldungsgemäßes Lichtleiter-Element 1 und eine Platine 10 mit einer darauf angeordneten LED 16 zur Erzeugung eines Lichts. Vorzugsweise sind auf der Platine 10 mehrere LEDs 16, 16' zur Erzeugung des Lichts angeordnet, und zwar insbesondere entlang einer Längsachse A der Platine 10.

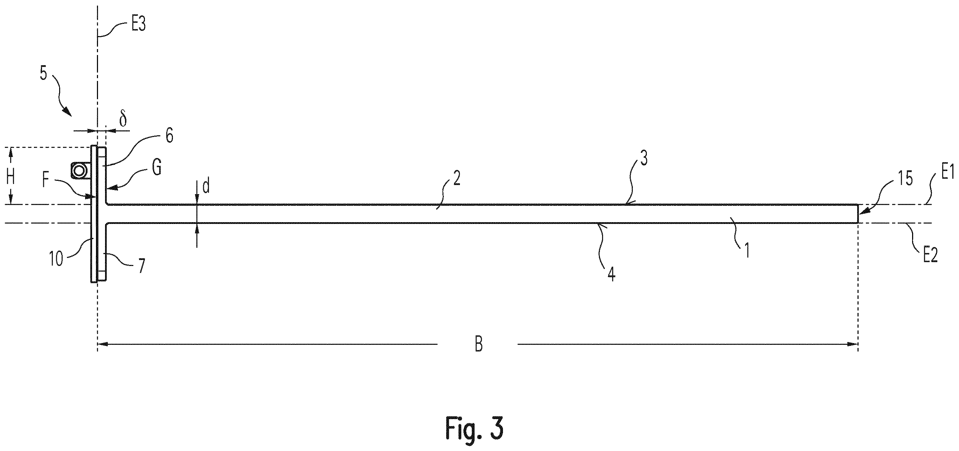

Fig. 3 zeigt eine Seitenansicht der Anordnung, wobei hier die Platine 10 wie vorgesehen mit dem Lichtleiter-Element 1 verbunden dargestellt ist. Das Lichtleiter-Element 1 weist einen plattenförmigen Bereich 2 mit einem ersten großen Oberflächenbereich 3 und einem dazu parallelen zweiten großen Oberflächenbereich 4 auf. Die beiden genannten Oberflächenbereiche 3, 4 sind vorzugsweise über eine stirnseitige schmale Kantenfläche 15 unmittelbar miteinander verbunden.

Der erste große Oberflächenbereich 3 erstreckt sich in einer ersten Ebene E1 und der zweite große Oberflächenbereich 4 in einer hierzu parallelen zweiten Ebene E2, wobei der Abstand zwischen der ersten Ebene E1 und der zweiten Ebene E2 der Stärke d des plattenförmigen Bereichs 2 entspricht. Die Längsachse A der Platine 10 ist vorzugsweise parallel zu der ersten Ebene E1 orientiert und verläuft insbesondere mittig zwischen der ersten Ebene E1 und der zweiten Ebene E2.

Beim gezeigten Beispiel ist das Lichtleiter-Element 1 normal zu der ersten Ebene E1 betrachtet rechteckig, so dass es eine Länge L und eine Breite B aufweist. Es kann dabei auch eine quadratische Form vorgesehen sein, so dass in diesem speziellen Fall L = B gilt.

Weiter weist das Lichtleiter-Element 1 einen Randbereich 5 auf, der zum Eintritt des Lichts vorgesehen ist, im Fall der in den Figuren 1 bis 3 gezeigten Ausführung zum Eintritt des Lichts der LEDs 16, 16', die auf der Platine 10 entlang der Längsachse A angeordnet sind. Bei der Anordnung zur Lichtabgabe, also wenn die Platine 10 wie vorgesehen mit dem Lichtleiter-Element 1 verbunden ist, erstreckt sich der Randbereich 5 parallel zur Längsachse A der Platine 10.

Erfindungsgemäß ist - wie dargestellt - der Randbereich 5 an einer der beiden Längsseiten des Lichtleiter-Elements 1 gebildet; alternativ kann er aber auch an einer der beiden Breitseiten entsprechend gebildet sein. Im ersten Fall beträgt die Länge des Randbereichs 5 vorzugsweise L, im zweiten Fall B.

Der erste große Oberflächenbereich 3 und/oder der zweite große Oberflächenbereich 4 sind zum Austritt des Lichts vorgesehen. Vorzugsweise weist das Lichtleiter-Element 1 hierzu auf wenigstens einem der beiden großen Oberflächenbereiche 3, 4 Lichtauskoppelstrukturen oder Lichtauskoppelelemente auf. Auf diese Weise eignet sich das Lichtleiter-Element 1 besonders gut zur Abgabe des Lichts über den ersten und/oder den zweiten großen Oberflächenbereich 3, 4.

Beispielsweise kann also der erste große Oberflächenbereich 3 nicht völlig plan gestaltet sein, sondern Lichtauskoppelstrukturen in Form von Strukturelementen aufweisen, die dazu dienen, das Licht aus dem plattenförmigen Bereich 2 nach außen zu lenken. Die Strukturelemente sind typischerweise klein im Vergleich zur Größe des ersten großen Oberflächenbereichs 3 und sind in den Zeichnungen nicht angegeben. Entsprechende Strukturelemente sind als solche aus dem Stand der Technik bekannt. Für den zweiten großen Oberflächenbereich 4 gilt Analoges.

Weiterhin umfasst das Lichtleiter-Element 1 einen länglichen, flanschartigen Bereich 6, der sich entlang des für den Eintritt des Lichts vorgesehenen Randbereichs 5 erstreckend über den ersten großen Oberflächenbereich 3 hinausragend gestaltet ist. Im gezeigten Beispiel ragt dementsprechend der flanschartige Bereich 6 über die Ebene E hinaus, und zwar um eine Höhe H. Vorzugsweise ist dabei die Gestaltung derart, dass H > d gilt und H < 5 d, besonders bevorzugt H > 2 d gilt und H < 4 d. Wie aus Fig. 3 hervorgeht, beträgt im gezeigten Beispiel die Höhe H etwa das Dreifache der Stärke d, so dass H ≈ 3 d gilt.

Der flanschartige Bereich 6 eignet sich besonders gut als Befestigungsstruktur zur Befestigung des Lichtleiter-Elements 1 an einem Trägerelement, beispielsweise in oder an einem Gehäuse einer Leuchte, insbesondere, wenn er sich geradlinig erstreckend gestaltet ist. Vorzugsweise erstreckt sich der flanschartige Bereich 6 entlang des gesamten Randbereichs 5; dementsprechend beträgt seine Länge ebenfalls L bzw. gegebenenfalls B.

Außerdem lässt sich durch den flanschartigen Bereich 6 erzielen, dass bei geeigneter Befestigungsmöglichkeit für das Lichtleiter-Element 1 die Stärke d des plattenförmigen Bereichs 2 besonders klein gewählt werden kann. So lässt sich das Lichtleiter-Element 1 unter besonders geringem Materialeinsatz herstellen. Für die Fertigung des Lichtleiter-Elements 1 bedeutet dies insbesondere besonders kurze Zykluszeiten für das Abkühlen und Aushärten der entsprechenden Formmasse.

Außerdem lässt sich durch die geringe Stärke d erzielen, dass sich das Lichtleiter-Element 1 mit einem besonders geringen Gewicht gestalten lässt.

Der flanschartige Bereich 6 kann - wie gezeigt - plattenförmig gestaltet sein und eine Stärke 8 aufweisen, die vorzugsweise kleiner ist als die Stärke d des plattenförmigen Bereichs 2. Dabei gilt weiterhin vorzugsweise δ < H, insbesondere δ < 0,5 H, besonders bevorzugt δ < 0,3 H. Die Länge des flanschartigen Bereichs 6 - also seine Erstreckung entlang der Längsachse A betrachtet - ist wie erwähnt vorzugsweise ebenso groß wie die entsprechende Gesamterstreckung L bzw. B des Lichtleiter-Elements 1. Grundsätzlich kann er aber auch kürzer gestaltet sein. In diesem Fall beträgt die Länge des flanschartigen Bereichs 6 vorzugsweise wenigstens 50%, insbesondere wenigstens 70% der entsprechenden Gesamterstreckung L bzw. B des Lichtleiter-Elements 1.

Vorzugsweise ist der flanschartige Bereich 6 mit Bezug auf den ersten großen Oberflächenbereich 3 senkrecht abstehend gestaltet. Erfindungsgemäß weist der flanschartige Bereich 6 einen Flächenbereich F auf, der sich in einer dritten Ebene E3 erstreckt, die senkrecht zu der ersten Ebene E1 orientiert ist. Der Flächenbereich F kann beispielsweise plan gestaltet sein und dabei als besonders geeignete Anlagefläche für die Platine 10 dienen. Dies ist insbesondere auch vorteilhaft mit Bezug auf eine definierte Positionierung der LEDs 16, 16' relativ zu dem Lichtleiter-Element 1.

Weiterhin erfindungsgemäß weist der flanschartige Bereich 6 außerdem einen weiteren Flächenbereich G auf, der vorzugsweise plan gestaltet ist und insbesondere parallel zu dem Flächenbereich F ausgebildet ist. Der Abstand der beiden Flächenbereiche F und G kann also der Stärke δ des flanschartigen Bereichs 6 entsprechen. Der Flächenbereich G kann dabei besonders geeignet zur Anlage des Lichtleiter-Elements 1 an einem Trägerelement, beispielsweise in einer Leuchte dienen.

Vorzugsweise sind der plattenförmige Bereich 2 und der flanschartige Bereich 6 nicht zerstörungsfrei voneinander trennbar miteinander verbunden. Insbesondere können sie stoffschlüssig miteinander verbunden sein, beispielsweise können sie aus einem Stück bestehend gebildet sein.

In dem in den Figuren 1 bis 3 gezeigten Ausführungsbeispiel weist das Lichtleiter-Element 1 weiterhin einen weiteren länglichen, flanschartigen Bereich 7 auf, der sich entlang des Randbereichs 5 erstreckend über den zweiten großen Oberflächenbereich 4 hinausragend gestaltet ist. Hierdurch ist eine besonders geeignete Befestigungsstruktur für das Lichtleiter-Element 1 gebildet.

Insbesondere kann - wie beispielsweise in Fig. 1 beispielhaft gezeigt - der weitere längliche, flanschartige Bereich 7 analog zu dem zuerst genannten flanschartigen Bereich 6 gebildet sein, insbesondere spiegelsymmetrisch zu diesem.

Vorzugsweise ist das Lichtleiter-Element 1 profilförmig bzw. als Profilelement gestaltet, wobei die Querschnittform des Profils aufgrund des plattenförmigen Bereichs 2 und der beiden flanschartigen Bereiche 6, 7 eine T-Form ist. Wie beispielsweise aus

Fig. 3 hervorgeht, ist durch den plattenförmigen Bereich 2 der Stamm des "T" gebildet und durch die beiden flanschartigen Bereiche 6, 7 die beiden Arme des "T".

Im gezeigten Beispiel ist die Formgebung des Lichtleiter-Elements 1 derart, dass die dritte Ebene E3 eine Begrenzungsebene des Lichtleiter-Elements 1 bildet. Der Flächenbereich F erstreckt sich hierbei in dieser dritten Ebene E3. Durch den weiteren länglichen, flanschartigen Bereich 7 ist in analoger Form ein entsprechender weiterer, in der dritten Ebene E3 verlaufender Flächenbereich gebildet, derart, dass eine besonders große, sich in der dritten Ebene E3 erstreckende Anlagefläche für die Platine 10 gebildet ist, die sich einerseits über die erste Ebene E1 hinaus erstreckt und andererseits über die zweite Ebene E2 hinaus.

Es ist vorgesehen, dass das Licht entlang des Randbereichs 5 zwischen der ersten Ebene E1 und der zweiten Ebene E2 in das Lichtleiter-Element 1 eingestrahlt wird. Dementsprechend ist vorgesehen, dass die LEDs 16, 16' zwischen der ersten Ebene E1 und der zweiten Ebene E2 angeordnet sind und zwar nahe an der dritten Ebene E3. Beispielsweise kann vorgesehen sein, dass der Abstand zwischen den LEDs 16, 16' und dem Lichtleiter-Element 1 weniger als 1 mm beträgt.

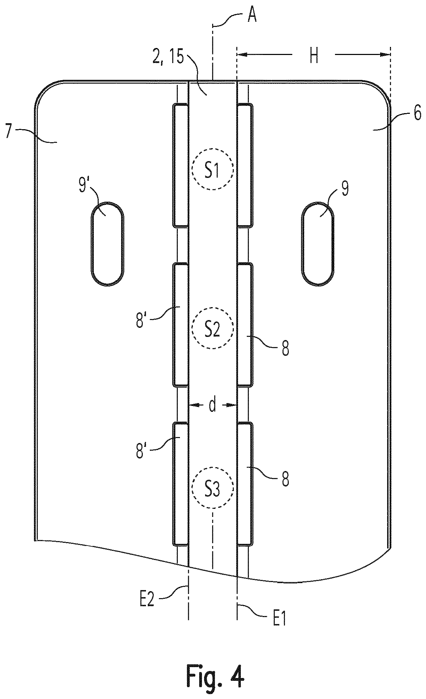

Fig. 4 zeigt eine Ansicht eines seitlichen Endbereichs des Lichtleiter-Elements 1 bei Blick auf die schmale Kantenfläche 15, wie durch einen in Fig. 2 skizzierten Pfeil P angedeutet. Man erkennt den zuerst genannten Flanschbereich 6 und den weiteren Flanschbereich 7, sowie die schmale Kantenfläche 15. Außerdem sind zwischen der ersten Ebene E1 und der zweiten Ebene E2 punktiert mehrere Stellen S1, S2, S3 angedeutet, die für die Positionierung der LEDs 16, 16' vorgesehen sind. Jede der Stellen S1, S2, S3 kann beispielsweise für eine einzelne LED vorgesehen sein oder für mehrere, beispielsweise zwei, drei oder vier LEDs vorgesehen sein. Dementsprechend erscheinen die Stellen S1, S2, S3 bei der in Fig. 4 verwendeten Blickrichtung entlang der Längsachse A.

Wie beispielsweise aus den Figuren 1 und 4 hervorgeht, weist der flanschartige Bereich 6 erfindungsgemäß mindestens eine Aussparung 8 auf, die zur Reflexion des Lichts gestaltet ist. Dabei ist die Aussparung 8 insbesondere in Form einer Durchgangsöffnung gestaltet. Die mindestens eine Aussparung 8 ist insbesondere korrelierend zu mindestens einer der, für die LEDs 16, 16' vorgesehenen Stellen S1, S2, S3 ausgestaltet. Vorzugsweise ist in dem flanschartigen Bereich 6 für jede der Stellen S1, S2, S3 jeweils eine Aussparung 8 vorgesehen.

Vorzugsweise ist die Aussparung 8 länglich gestaltet, wobei sich ihre Längsachse parallel zur ersten Ebene E1 und insbesondere parallel zur Längsachse A erstreckt. So kann es sich bei der Ausnehmung 8 insbesondere um einen Schlitz handeln. Dabei ist die längliche Gestalt vorzugsweise derart gewählt, dass sich die Aussparung 8 entlang der Längsachse A betrachtet beidseits über die entsprechende korrelierende Stelle S1, S2, S3 hinaus erstreckt.

Vorzugsweise ist die Ausnehmung 8 dabei derart gestaltet, dass sich einer der beiden Längsränder der Ausnehmung 8 in der ersten Ebene E1 erstreckt. Die Breite der Ausnehmung 8 ist vorzugsweise kleiner als die Stärke d des plattenförmigen Bereichs 2, vorzugsweise kleiner als ½ d. Besonders vorteilhafte Reflexions- bzw. Totalreflexionseigenschaften lassen sich erzielen, wenn die Ausnehmung 8 hierfür eine gute Oberflächenqualität aufweist.

Durch die mindestens eine Ausnehmung 8 lässt sich erzielen, dass ein Anteil des Lichts, der an der entsprechenden korrelierenden Stelle S1, S2, S3 in das Lichtleiter-Element 1 eingestrahlt wird, dort reflektiert, insbesondere totalreflektiert wird und im Weiteren in den plattenförmigen Teil 2 geleitet wird, anstatt in den flanschartigen Bereich 6 vorzudringen und so für den weiteren vorgesehenen Lichtverlauf verloren zu gehen. Dies ist vorteilhaft mit Bezug auf die lichttechnische Effizienz der Anordnung.

Außerdem lässt sich durch die wenigstens eine Ausnehmung 8 erzielen, dass die Lichtabgabe über den ersten und/oder zweiten großen Oberflächenbereich 3, 4 besonders homogen ist.

Vorzugsweise erstrecken sich die Ausnehmungen 8 entlang der Längsachse A betrachtet nur ein gewisses Maß über die Stellen S1, S2, S3 hinaus. So sind zwischen den Ausnehmungen 8 sozusagen Brückenbereiche gebildet, die vorteilhaft mit Bezug auf die Stabilität des Lichtleiter-Elements 1 sind.

Der weitere flanschartige Bereich 7 ist vorzugsweise auch insoweit analog gestaltet, so dass er mindestens eine entsprechende Ausnehmung 8' aufweist; so lässt sich insbesondere erzielen, dass jede der Stellen S1, S2, S3 sozusagen von jeweils zwei der Aussparungen 8, 8' flankiert ist.

Vorzugsweise weist der flanschartige Bereich 6 außerdem wenigstens ein Loch 9 zur Befestigung und/oder Positionierung des Lichtleiter-Elements 1 an einem Trägerelement und/oder zur Befestigung und/oder Positionierung der Platine 10 an dem Lichtleiter-Element 1 auf.

Beispielsweise kann das Loch 9 - wie aus Fig. 1 hervorgeht - mit Bezug auf die Erstreckung des Randbereichs 5 in der Mitte ausgebildet sein. Im Fall einer betriebsbedingten Erwärmung kommt es in der Regel zu einer Längenausdehnung der Platine 10 und auch zu einer entsprechenden Ausdehnung des Lichtleiter-Elements 1, allerdings aufgrund unterschiedlicher Längenausdehnungskoeffizienten in unterschiedlicher Weise. Daher ist es vorteilhaft, die Platine 10 in der Mitte des Randbereichs 5 in ihrer Lage relativ zu dem Lichtleiter-Element 1 zu fixieren.

Wenn das wenigstens eine Loch 9 - wie ebenfalls in den Figuren skizziert - an den Endbereichen des Randbereichs 5 ausgebildet ist, eignet es sich besonders zur Befestigung des Lichtleiter-Elements 1 an einem Trägerelement, also beispielsweise an bzw. in einem Gehäuse einer Leuchte.

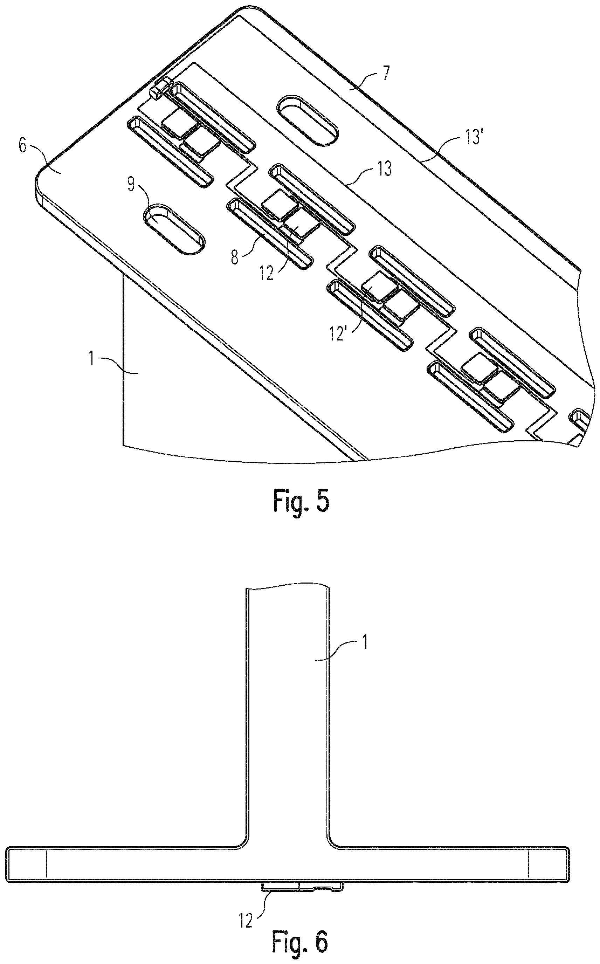

Die in den Figuren 1 bis 4 skizzierte Anordnung umfasst das Lichtleiter-Element 1 und die Platine 10 mit den LEDs 16, 16'. Die Figuren 5 und 6 zeigen Skizzen zu einer alternativen Anordnung, bei der keine Platine erforderlich ist. Soweit nicht anders angegeben, gelten die obigen Ausführungen entsprechend.

Bei der in den Figuren 5 und 6 skizzierten Ausführung ist eine LED 12 zur Erzeugung des Lichts an dem Randbereich 5 des Lichtleiter-Elements 1 angeordnet, insbesondere unmittelbar an dem Randbereich 5. Vorzugsweise ist die LED 12 insoweit in analoger Weise zu oben zwischen der ersten Ebene E1 und der zweiten Ebene E2 angeordnet.

Besonders bevorzugt ist in diesem Fall auch eine mit der LED 12 elektrisch verbundene Leiterbahn 13 zur Stromversorgung der LED 12 insbesondere unmittelbar an dem Randbereich 5 angeordnet. Der flanschartige Bereich 6 und gegebenenfalls auch der weitere flanschartige Bereich 7 stellen hier geeignete Flächen zur Anordnung entsprechender Leiterbahnen dar. Durch die flanschartigen Bereiche 6 und 7 ist in der dritten Ebene E3 sozusagen eine verbreiterte Fläche gebildet, die hier als Montagefläche für die Anordnung von LEDs und Leiterbahnen dient.

Die Leiterbahn 13 kann insbesondere auf das Lichtleiter-Element 1 aufgedruckt sein.

Selbstverständlich können wiederum mehrere LEDs 12, 12' vorgesehen sein, insbesondere entlang einer entsprechenden Längsachse A und mehrere Leiterbahnen 13, 13'.

Auch eignet sich die Montagefläche für die Anordnung eines elektrischen Anschlusselements der Anordnung.

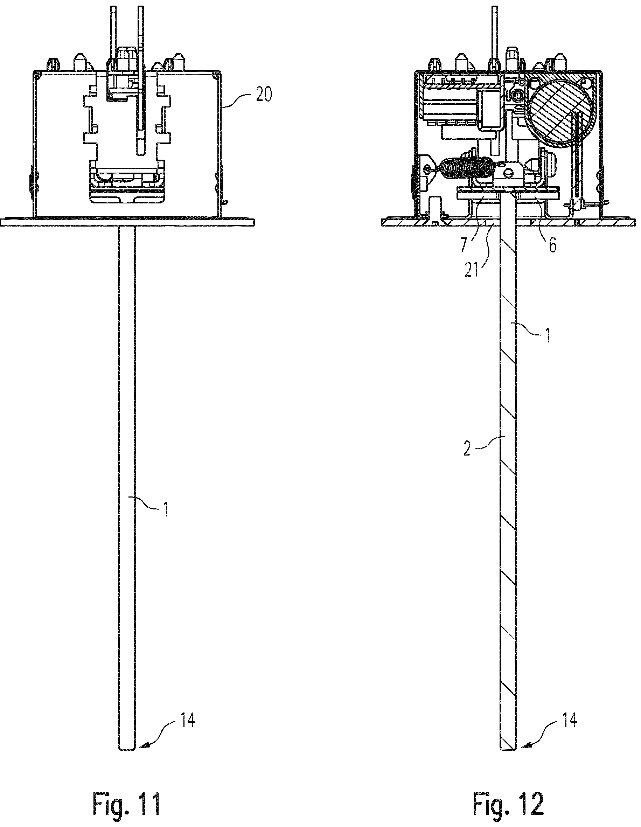

Fig. 11 zeigt eine Seitenansicht einer anmeldungsgemäßen Leuchte - hier in Form einer Deckeneinbauleuchte - mit einer anmeldungsgemäßen Anordnung zur Lichtabgabe. Fig. 12 zeigt eine entsprechende Querschnitt-Darstellung. Bei der Leuchte kann es sich beispielsweise um eine Rettungszeichenleuchte handeln.

Die Leuchte weist ein Gehäuse 20 auf. Das Lichtleiter-Element 1 ist an dem Gehäuse 20 bzw. an einem in dem Gehäuse angeordneten Trägerelement angeordnet, beispielsweise mit Hilfe einer Verschraubung unter Nutzung des wenigstens einen Lochs 9 in dem flanschartigen Bereich 6 bzw. in dem weiteren flanschartigen Bereich 7.

Wie aus den Figuren 11 und 12 beispielhaft hervorgeht, weist das Lichtleiter-Element 1 einen, weiteren Randbereich 14 auf, der eine Außenfläche der Leuchte bildet. Der weitere Randbereich 14 kann insbesondere dem zuerst genannten Randbereich 5 zum Lichteintrag gegenüberliegen. An dem weiteren Randbereich 14 ist dementsprechend insbesondere kein Rahmenelement der Leuchte vorgesehen. Dies ist vorteilhaft mit Bezug auf das äußere Erscheinungsbild der Leuchte.

Insbesondere kann die Gestaltung derart sein, dass das Gehäuse 20 der Leuchte eine längliche Öffnung 21 aufweist und das Lichtleiter-Element 1 derart angeordnet ist, dass es mit seinem plattenförmigen Bereich 2 die Öffnung 21 durchsetzt. Dabei ist das Lichtleiter-Element 1 lediglich im Inneren des Gehäuses 20 gehalten, so dass der plattenförmige Bereich 2 ohne ein Rahmenelement durch die Öffnung 21 hindurch aus dem Gehäuse 20 heraus nach außen ragt.

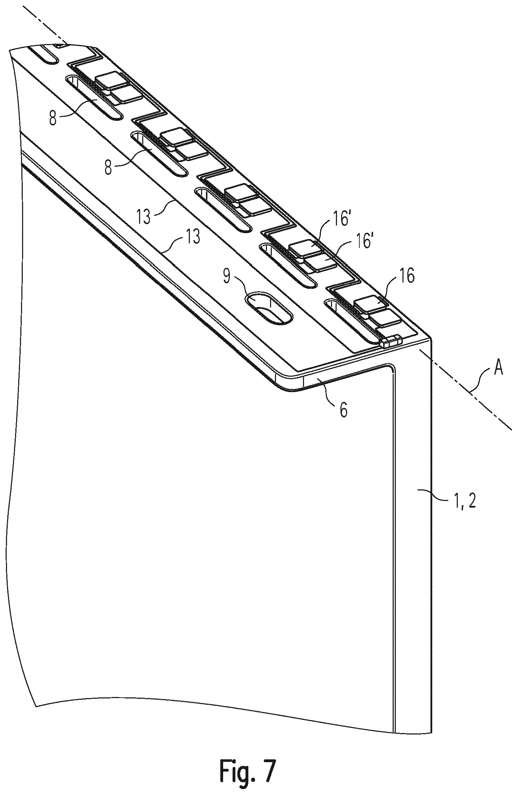

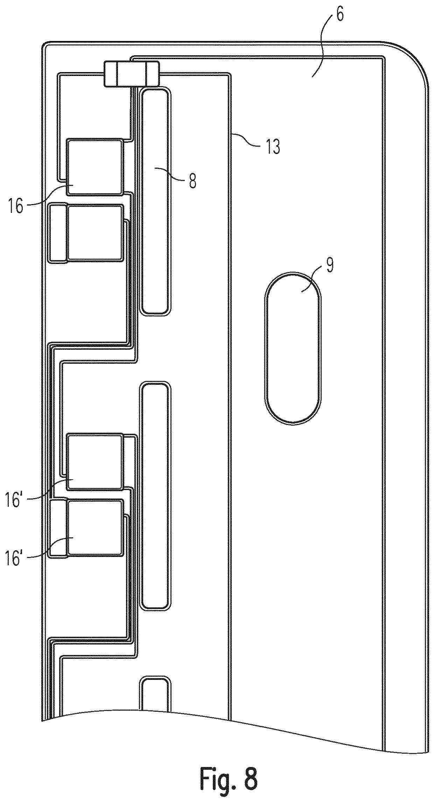

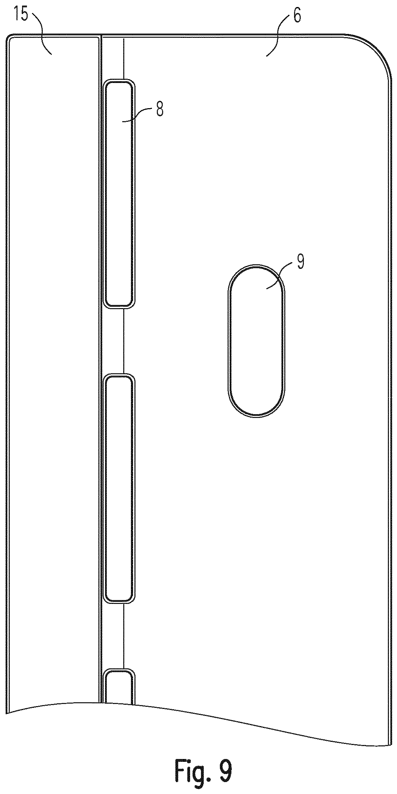

In den Figuren 7 bis 9 ist eine Variante dargestellt, bei der das Lichtleiter-Element 1 lediglich den zuerst genannten flanschartigen Bereich 6 aufweist, jedoch keinen weiteren entsprechenden Flanschbereich. Fig. 7 zeigt eine perspektivische Skizze bei schräg auf den Randbereich 5 gerichtetem Blick, Fig. 8 eine Ansicht eines seitlichen Endbereichs des Lichtleiter-Elements 1 bei Blickrichtung auf den Randbereich 5 und Fig. 9 eine Ansicht des seitlichen Endbereichs bei entgegengesetzter Blickrichtung, also bei Blickrichtung entlang des plattenförmigen Bereichs 2 auf die schmale Kantenfläche 15.

Bei dieser Ausführung ergibt sich ein Profil, dessen Querschnitt eine L-Form aufweist. Durch den plattenförmigen Bereich 2 ist dabei der Stamm des "L" gebildet und durch den flanschartigen Bereich 6 der Arm des "L". Diese Gestaltung kann sowohl für unmittelbar an dem Randbereich 5 angeordnete LEDs 12 und Leiterbahnen 13 vorgesehen sein, als auch für den Fall einer entsprechenden Anordnung mit einer separaten Platine.

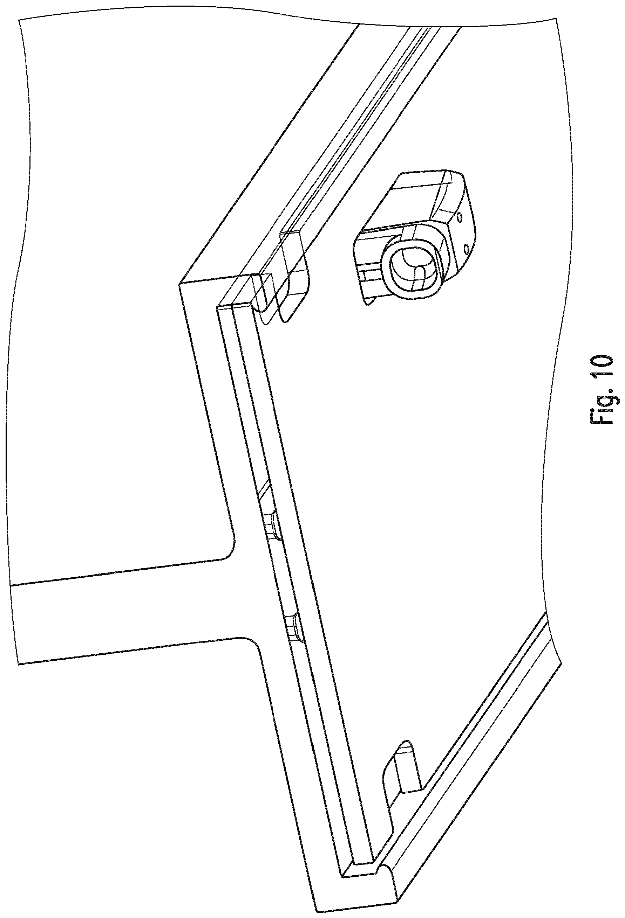

In Fig. 10 ist eine Variante skizziert, bei der das Lichtleiter-Element zwei flanschartige Bereiche aufweist, die jeweils umgebogene Endbereiche zur Halterung der Platine aufweisen. Zur Positionierung der Platine entlang der Längsachse A betrachtet kann hier insbesondere eine Rast-Positionierung vorgesehen sein, also beispielsweise eine seitens des Lichtleiter-Elements ausgebildete Ausbuchtung, die zur Längspositionierung in eine korrespondierende Bohrung in der Platine eingreift. Aus den oben genannten Gründen ist die Rast-Positionierung vorzugsweise mit Bezug auf den Randbereich 5 mittig ausgebildet.

Als weitere Variation kann vorgesehen sein, dass an dem Lichtleiter-Element an denjenigen Stellen S1, S2, S3, die für die Positionierung der LEDs 16, 16' vorgesehen sind, Linsenbereiche ausgebildet sind. Hierdurch lässt sich ein besonders vorteilhafter Lichteintrag in das Innere des Lichtleiter-Elements erzielen.

Als weitere Variation kann vorgesehen sein, dass das Lichtleiter-Element außerdem einen weiteren Randbereich aufweist, der insbesondere dem zuerst genannten Randbereich 5 zum Eintritt des Lichts gegenüberliegt, wobei der weitere Randbereich analog zu dem zuerst genannten Randbereich 5 gestaltet ist. So eignet sich das Lichtleiter-Element zum Eintrag von Licht von zwei gegenüberliegenden Seiten her. In diesem Fall kann das Lichtleiter-Element dementsprechend einen U-förmigen oder einen H-förmigen Querschnitt aufweisen.

Vorteile, die sich mit einer anmeldungsgemäßen Gestaltung erzielen lassen, sind insbesondere:
- Zur Herstellung des Lichtleiter-Elements ist verhältnismäßig wenig Material erforderlich. So lassen sich kurze Zykluszeiten in der Fertigung erzielen.
- Die Anordnung weist eine hohe lichttechnische Effizienz auf.
- Mit der Anordnung lässt sich eine besonders homogene Lichtabgabe erzielen.
- Die Anordnung lässt sich mit besonders geringem Gewicht gestalten.
- Die Anordnung lässt sich besonders gut, beispielsweise durch Verschrauben an einem Trägerelement befestigen.
- Das Lichtleiter-Element eignet sich zum Aufdrucken von Leiterbahnen.
- Das Lichtleiter-Element bietet geeigneten Platz zum Anbringen von Anschlusselementen.
- Die Leuchte lässt sich mit einem besonders ansprechenden Erscheinungsbild gestalten.

## Patentansprüche

1. Lichtleiter-Element (1), aufweisend
- einen plattenförmigen Bereich (2) mit einem ersten Oberflächenbereich (3), welcher sich in einer ersten Ebene (E1) erstreckt, und einem dazu parallelen zweiten Oberflächenbereich (4), welcher sich in einer zweiten Ebene (E2) erstreckt,
wobei ein Randbereich (5) des Lichtleiter-Elements (1), welcher in einer Ebene senkrecht zur ersten Ebene (E1) angeordnet ist und entlang einer Längsseite des Lichtleiter-Elements (1) gebildet ist, Stellen (S1, S2, S3) aufweist, welche zwischen der ersten Ebene (E1) und der zweiten Ebene (E2) angeordnet sind, wobei jede Stelle (S1, S2, S3) zum Eintritt von einem durch zumindest eine LED (16, 16') erzeugten Licht vorgesehen ist und der erste Oberflächenbereich (3) und/oder der zweite Oberflächenbereich (4) zum Austritt des Lichts vorgesehen sind,
- einen länglichen, flanschartigen Bereich (6), der sich entlang des für den Eintritt des Lichts vorgesehenen Randbereichs (5) erstreckend angeordnet ist, wobei der flanschartige Bereich (6) einen Flächenbereich (F), der auf einer senkrecht zur ersten Ebene (E1) orientierten dritten Ebene (E3) angeordnet ist, und einen zum Flächenbereich (F) parallelen weiteren Flächenbereich (G) aufweist, wobei der flanschartige Bereich über den ersten Oberflächenbereich (3) hinausragend gestaltet ist,
**dadurch gekennzeichnet,**
**dass** der flanschartige Bereich (6) mindestens eine Aussparung (8) in Form einer Durchgangsöffnung, welche sich parallel zur ersten Ebene (E1) vom Flächenbereich (F) hin zum weiteren Flächenbereich (G) erstreckt, zur Totalreflexion des über den Randbereich (5) eingetretenen Lichts aufweist, um das totalreflektierte Licht in den plattenförmigen Bereich (2) zu leiten, und wobei die mindestens eine Aussparung (8) korrelierend zu mindestens einer der Stellen (S1, S2, S3) ausgestaltet ist.

2. Lichtleiter-Element nach Anspruch 1,
**dadurch gekennzeichnet,**
**dass** der plattenförmige Bereich (2) und der flanschartige Bereich (6) nicht zerstörungsfrei voneinander trennbar miteinander verbunden sind, insbesondere stoffschlüssig miteinander verbunden sind, beispielsweise aus einem Stück bestehend gebildet sind.

3. Lichtleiter-Element nach Anspruch 1 oder 2,
**dadurch gekennzeichnet,**
**dass** der flanschartige Bereich (6) geradlinig gestaltet ist.

4. Lichtleiter-Element nach einem der vorhergehenden Ansprüche,
**dadurch gekennzeichnet,**
**dass** der flanschartige Bereich (6) mit Bezug auf den ersten Oberflächenbereich (3) senkrecht abstehend gestaltet ist.

5. Lichtleiter-Element nach einem der vorhergehenden Ansprüche,
**gekennzeichnet durch**
- einen weiteren länglichen, flanschartigen Bereich (7), der sich entlang des Randbereichs (5) erstreckend über den zweiten Oberflächenbereich (4) hinausragend gestaltet ist.

6. Lichtleiter-Element nach einem der vorhergehenden Ansprüche,
**dadurch gekennzeichnet,**
**dass** der flanschartige Bereich (6) ein Loch (9) zur Befestigung und/oder Positionierung des Lichtleiter-Elements (1) an einem Trägerelement und/oder zur Befestigung und/oder Positionierung einer Platine (10) an dem Lichtleiter-Element (1) aufweist.

7. Lichtleiter-Element nach einem der vorhergehenden Ansprüche,
**dadurch gekennzeichnet,**
**dass** wenigstens einer der beiden Oberflächenbereiche (3,
4)Lichtauskoppelstrukturen oder Lichtauskoppelelemente aufweist.

8. Lichtleiter-Element nach einem der vorhergehenden Ansprüche,
**gekennzeichnet durch**
- einen, an dem Randbereich (5) ausgebildeten Linsenbereich (11) zur optischen Beeinflussung des Lichts.

9. Anordnung zur Lichtabgabe, aufweisend
- ein Lichtleiter-Element (1) nach einem der vorhergehenden Ansprüche und
- eine Platine (10) mit mindestens einer darauf angeordneten LED (16, 16') zur Erzeugung des Lichts,
wobei die LED (16, 16') gegenüber dem Lichtleiter-Element (1) derart angeordnet ist, dass das Licht über den Randbereich (5) in das Lichtleiter-Element (1) eintritt und über den ersten Oberflächenbereich (3) und/oder den zweiten Oberflächenbereich (4) aus dem Lichtleiter-Element (1) austritt.

10. Anordnung zur Lichtabgabe, aufweisend
- ein Lichtleiter-Element (1) nach einem der Ansprüche 1 bis 8, **gekennzeichnet durch**
- eine an dem Randbereich (5) des Lichtleiter-Elements (1) angeordnete LED (12) zur Erzeugung des Lichts.

11. Anordnung zur Lichtabgabe nach Anspruch 10,
**gekennzeichnet durch**
- eine, insbesondere unmittelbar an dem Randbereich (5) angeordnete und mit der LED (12) elektrisch verbundene Leiterbahn (13) zur Stromversorgung der LED (12).

12. Leuchte, aufweisend
- ein Lichtleiter-Element (1) nach einem der Ansprüche 1 bis 8 oder
- eine Anordnung zur Lichtabgabe nach einem der Ansprüche 9 bis 11.

13. Leuchte nach Anspruch 12, insbesondere in Form einer Rettungszeichenleuchte, **dadurch gekennzeichnet,**
**dass** das Lichtleiter-Element (1) einen, insbesondere dem zuerst genannten Randbereich (5) gegenüberliegenden weiteren Randbereich (14) aufweist, wobei die Leuchte derart gestaltet ist, dass der weitere Randbereich (14) eine Außenfläche der Leuchte bildet.

## Claims

1. Light guide element (1), comprising
- a plate-shaped region (2) having a first surface region (3) which extends in a first plane (E1) and a second surface region (4) which extends parallel to said first surface region in a second plane (E2),
wherein an edge region (5) of the light guide element (1), which is disposed in a plane perpendicular to the first plane (E1) and is formed along a longitudinal side of the light guide element (1), comprises locations (S1, S2 S3) that are disposed between the first plane (E1) and the second plane (E2), wherein each location (S1, S2 S3) is provided for the entry of a light produced by at least one LED (16, 16') and the first surface region (3) and/or the second surface region (4) are provided for the light to exit,
- an elongated flange-like region (6) which is disposed extending along the edge region (5) provided for the entry of the light, wherein the flange-like region (6) comprises a surface region (F) which is disposed on a third plane (E3) oriented perpendicular to the first plane (E1) and a further surface region (G) parallel to the surface region (F), wherein the flange-like region is configured to project beyond the first surface region (3),
**characterized in that**
the flange-like region (6) comprises at least one recess (8), in the form of a through-opening which extends parallel to the first plane (E1) from the surface region (F) to the further surface region (G), for total reflection of the light that has entered via the edge region (5) in order to guide the totally reflected light into the plate-shaped region (2), and wherein the at least one recess (8) is configured to correlate to at least one of the locations (S1, S2, S3).

2. Light guide element according to Claim 1,
**characterized in that**
the plate-shaped region (2) and the flange-like region (6) are not connected to one another such that they can be separated from one another in a non-destructive manner, are in particular connected to one another in a material-locking manner, for example are formed from one piece.

3. Light guide element according to Claim 1 or 2, **characterized in that**
the flange-like region (6) is configured to be rectilinear.

4. Light guide element according to any one of the preceding claims,
**characterized in that**
the flange-like region (6) is configured to project vertically with respect to the first surface region (3).

5. Light guide element according to any one of the preceding claims,
**characterized by**
- a further elongated, flange-like region (7), which is configured to extend along the edge region (5) and project beyond the second surface region (4).

6. Light guide element according to any one of the preceding claims,
**characterized in that**
the flange-like region (6) comprises a hole (9) for mounting and/or positioning the light guide element (1) on a support element and/or for mounting and/or positioning a circuit board (10) on the light guide element (1).

7. Light guide element according to any one of the preceding claims,
**characterized in that**
at least one of the two surface regions (3, 4) comprises light outcoupling structures or light outcoupling elements.

8. Light guide element according to any one of the preceding claims,
**characterized by**
- a lens region (11) formed on the edge region (5) for optically influencing the light.

9. Arrangement for emitting light, comprising
- a light guide element (1) according to any one of the preceding claims and
- a circuit board (10) having at least one LED (16, 16) disposed upon it for generating the light,
wherein the LED (16, 16') is disposed relative to the light guide element (1) such that the light enters the light guide element (1) via the edge region (5) and exits the light guide element (1) via the first surface region (3) and/or the second surface region (4).

10. Arrangement for emitting light, comprising
- a light guide element (1) according to any one of Claims 1 to 8,
**characterized by**
- an LED (12) disposed on the edge region (5) of the light guide element (1) for generating the light.

11. Arrangement for emitting light according to Claim 10, **characterized by**
- a strip conductor (13), which is in particular disposed directly on the edge region (5) and electrically connected to the LED (12), for supplying power to the LED (12).

12. Lamp comprising
- a light guide element (1) according to any one of Claims 1 to 8 or
- an arrangement for emitting light according to any one of Claims 9 to 11.

13. Lamp according to Claim 12, in particular in the form of an escape sign lamp,
**characterized in that**
the light guide element (1) comprises a further edge region (14), which is in particular opposite to the first mentioned edge region (5), wherein the lamp is configured such that the further edge region (14) forms an outer surface of the lamp.

## Revendications

1. Élément de guidage de lumière (1), présentant
- une zone en forme de plaque (2) comprenant une première zone de surface (3), laquelle s'étend dans un premier plan (E1), et une deuxième zone de surface (4) parallèle à celle-ci, laquelle s'étend dans un deuxième plan (E2),
une zone de bord (5) de l'élément de guide de lumière (1), laquelle est disposée dans un plan perpendiculaire au premier plan (E1) et formée le long d'un côté longitudinal de l'élément de guidage de lumière (1), présentant des emplacements (S1, S2, S3), lesquels sont disposés entre le premier plan (E1) et le deuxième plan (E2), chaque emplacement (S1, S2, S3) étant prévu pour l'entrée d'un lumière générée par au moins une DEL (16, 16') et la première zone de surface (3) et/ou la deuxième zone de surface (4) étant prévues pour la sortie de la lumière,
- une zone en forme de bride (6) allongée, qui est disposée s'étendant le long de la zone de bord (5) prévue pour l'entrée de la lumière, la zone en forme de bride (6) présentant une zone de surface (F), qui est disposée sur le troisième plan (E3) orienté perpendiculaire au premier plan (E1), et une autre zone de surface (G) parallèle à la zone de surface (F), la zone en forme de bride étant conçue faisant saillie au delà de la première zone de surface (3), **caractérisé en ce**
**que** la zone en forme de bride (6) présente au moins une cavité (8) sous la forme d'une ouverture de passage, laquelle s'étend parallèle au premier plan (E1) de la zone de surface (F) vers la deuxième zone de surface (G), pour la réflexion totale de la lumière entrant à travers la zone de bord (5), afin de guider la lumière totalement réfléchie dans la zone en forme de plaque (2), et l'au moins une cavité (8) étant conçue en corrélation avec au moins un des emplacements (S1, S2, S3) .

2. Élément de guidage de lumière selon la revendication 1, **caractérisé en ce**
**que** la zone en forme de plaque (2) et la zone en forme de bride (6) sont connectées l'une à l'autre d'une manière non séparable sans destruction, en particulier connectées l'une à l'autre par adhérence de matière, par exemple étant formées d'une seule pièce.

3. Élément de guidage de lumière selon la revendication 1 ou 2, **caractérisé en ce**
**que** la zone en forme de bride (6) est conçue rectiligne.

4. Élément de guidage de lumière selon l'une quelconque des revendications précédentes,
**caractérisé en ce**
**que** la zone en forme de bride (6) est conçue faisant saillie perpendiculairement par rapport à la première zone de surface (3) .

5. Élément de guidage de lumière selon l'une quelconque des revendications précédentes,
**caractérisé par**
- une autre zone en forme de bride (7) allongée, qui s'étend le long de la zone de bord (5), est conçue faisant saillie au dessus de la deuxième zone de surface (4).

6. Élément de guidage de lumière selon l'une quelconque des revendications précédentes,
**caractérisé en ce**
**que** la zone en forme de bride (6) présente un trou (9) pour la fixation et/ou le positionnement de l'élément de guidage de lumière (1) sur un élément de support et/ou pour la fixation et/ou le positionnement d'une carte de circuit imprimé (10) sur l'élément de guidage de lumière (1).

7. Élément de guidage de lumière selon l'une quelconque des revendications précédentes,
**caractérisé en ce**
**qu'**au moins une des deux zones de surface (3, 4) présente des structures de découplage de lumière ou des éléments de découplage de lumière.

8. Élément de guidage de lumière selon l'une quelconque des revendications précédentes,
**caractérisé par**
- une zone de lentille (11) formée sur la zone de bord (5) pour influencer optiquement la lumière.

9. Ensemble d'émission de lumière, présentant
- un élément de guidage de lumière (1) selon l'une quelconque des revendications précédentes et
- une carte de circuit imprimé (10) comprenant au moins une DEL (16, 16') disposée dessus, pour la génération de la lumière,
la DEL (16, 16') étant disposée de telle façon par rapport à l'élément de guidage de lumière (1) que la lumière entre à travers la zone de bord (5) dans l'élément de guidage de lumière (1) et sort à travers la première zone de surface (3) et/ou la deuxième zone de surface (4) de l'élément de guidage de lumière (1).

10. Ensemble d'émission de lumière, présentant
- un élément de guidage de lumière (1) selon l'une quelconque des revendications 1 à 8,
**caractérisé par**
- une DEL (12) disposée sur la zone de bord (5) de l'élément de guidage de lumière (1) pour la génération de la lumière.

11. Ensemble d'émission de lumière selon la revendication 10, **caractérisé par**
- une piste conductrice (13) disposée en particulier directement sur la zone de bord (5) et connectée électriquement à la DEL (12) pour l'alimentation électrique de la DEL (12).

12. Luminaire, présentant
- un élément de guidage de lumière (1) selon l'une quelconque des revendications 1 à 8 ou
- un ensemble d'émission de lumière selon l'une quelconque des revendications 9 à 11.

13. Luminaire selon la revendication 12, en particulier sous la forme d'un luminaire de signalisation,
**caractérisé en ce**
**que** l'élément de guidage de lumière (1) présente une autre zone de bord (14), en particulier opposée à la zone de bord (5) mentionnée en premier, le luminaire étant conçu de telle façon que l'autre zone de bord (14) forme une surface extérieure du luminaire.
